# EUROPEAN PATENT SPECIFICATION

(11) **EP 3 725 557 B1**
(45) Date of publication and mention of the grant of the patent: **17.08.2022**
(21) Application number: 18887611.4
(22) Date of filing: 05.12.2018
(51) Int. Cl.: B60C 13/00, B60C 11/13

(54) **TIRE**
REIFEN
PNEUMATIQUE

(30) Priority: 13.12.2017 JP 2017238588
(43) Date of publication of application: 21.10.2020
(73) Proprietor: Bridgestone Corporation, Chuo-Ku Tokyo 104-8340 (JP)
(72) Inventor: IWABUCHI, Sotaro, Tokyo 104-8340 (JP); FUKUNAGA, Takayuki, Tokyo 104-8340 (JP)
(74) Representative: Oxley, Robin John George
(86) International application number: PCT/JP2018/044785
(87) International publication number: WO 2019/116992

(56) References cited:
- JP-A- H11 321 243
- JP-A- 2013 071 651
- JP-A- 2016 084 041
- JP-A- 2016 215 693
- JP-A- 2016 215 702
- JP-A- 2017 136 958
- US-A1- 2010 139 831

## Description

### Technical Field

The present invention relates to a tire having projections formed on an outer surface.

### Background Art

Conventionally, a pattern region having contrast has been formed through forming of fine projections on a side portion of a tire. For example, International Publication No. 2012/131089 discloses a technique that provides large contrast on the side portion of a tire with a plurality of projections formed all over the pattern region. Attention is also drawn to the disclosures of US2010/139831, JP-H11 321243 and JP 2016 215693.

### SUMMARY OF INVENTION

### Technical Problem

The decorative portion of the side portion of the tire has one region in which projections are formed. Since the projections control reflection of light, the brightness of this one region is low compared with the brightness of another region in which the light is reflected as it is. However, when the brightness of the entire one region in which the projections are formed is lowered to the same degree, a range of expression of the decorative portion in which the projections are formed in the tire is limited.

An object of the present invention is to broaden the range of expression of the decorative portion having a region in which the projections are formed in the tire.

### Solution to Problem

A tire according to a first aspect is a tire including: a decorative portion that is formed on an outer surface of the tire and has a base surface; and a pattern region that is provided at the decorative portion and that includes a plurality of projections projecting from the base surface and formed at an interval of from more than 0.1 mm to 1.0 mm, the plurality of projections having a height of from 0.1 mm to 1.0 mm, in which the pattern region is provided with a gradual decrease region in which a height of projections disposed adjacent to each other gradually decreases.

According to this tire, a pattern region is formed in the decorative portion on the outer surface of the tire. In this pattern region, a plurality of projections projecting from the base surface and having a height of from 0.1 mm to 1.0 mm is formed at an interval of from more than 0.1 mm to 1.0 mm.

Accordingly, light that enters the pattern region declines while being repeatedly reflected on side surfaces, of the projections, facing each other and is reflected to the outer side. Therefore, the brightness of the pattern region is low compared with the brightness of the other region (flat surface) in which the projections are not formed on the outer surface of the tire.

The pattern region is provided with a gradual decrease region in which the height of the projections disposed adjacent to each other gradually decreases. As described above, the light that enters the pattern region declines while being repeatedly reflected on the side surfaces, of the projections, facing each other. However, when the height of the projections is low, the decline of the light decreases and the amount of light reflected to the outer side of the tire increases, whereby the brightness increases.

Since the height of the projections gradually decreases in the gradual decrease region, the amount of light reflected to the outer side of the tire increases from a portion including higher projections to a portion including lower projections, whereby the brightness gradually increases. This means that a gradation is added to the brightness in the gradual decrease region, and as compared with a case where the brightness is constant, the range of expression of the decorative portion having a region in which the projections are formed in the tire can be broadened.

Additionally, in the tire according to the first aspect, the gradual decrease region includes projections having a constant height from the base surface and a bottom raising portion including a gradual increase portion having a height from the base surface that gradually increases across the projections, so that a height from the bottom raising portion to tops of the projections gradually decreases.

In this tire, the projections have a constant height from the base surface and a bottom raising portion includes a gradual increase portion having a height from the base surface that gradually increases across the projections. As a result, a configuration can be achieved in which a height from the bottom raising portion to the tops of the projections is gradually decreased.

A second aspect provides the tire according to the first aspect, in which the bottom raising portion includes two gradual increase portions connected in mutually opposite directions.

In this tire, the bottom raising portion includes two gradual increase portions connected in mutually opposite directions. Therefore, the height of the bottom raising portion gradually increases from one side to the other side, exceeds the peak of the height of the bottom raising portion, and then gradually decreases.

Therefore, in a portion in which this bottom raising portion is disposed, the light reflected to the outer side of the tire gradually increases and then gradually decreases. In other words, the range of expression of the decorative portion can be further broadened as compared with only a case where the brightness gradually increases, gradually decreases, and gradually increases, and then black color suddenly appears.

A third aspect provides the tire according to the first or the second aspect, in which a portion in which a height of the bottom raising portion changes is formed with a curve that projects toward the base surface.

The portion in which the height of the bottom raising portion changes is formed with a curved surface that projects toward the base surface. Therefore, an inclination angle of the bottom raising portion (curved surface portion) with respect to the base surface gradually increases toward the top from a foot portion, and thus a change in the amount of light reflected to the outer side of the tire is relatively small in the foot portion and relatively large around the top.

Consequently, as compared with a case where the portion in which the height of the bottom raising portion changes is formed with a curved surface that recesses toward a base portion or a plane surface, it is possible to make a portion in which the height of the bottom raising portion is maximum appear to be bright and clear. In other words, a change in the brightness is small around the foot portion of the bottom raising portion and the change in the brightness is large around the top. Therefore, the portion in which the height of the bottom raising portion is maximum stands out. In this way, the range of expression of the decorative portion can be further broadened.

A fourth aspect provides the tire according to any one of the first to the third aspects, in which the base surface is a bottom of a recess formed toward an inner side of the tire with respect to the outer surface, and the bottom raising portion is formed such that a top of the bottom raising portion does not project toward an outer side of the tire from the outer surface.

In this tire, the top of the bottom raising portion is formed so as not to project toward the outer side of the tire from the outer surface of the tire. Therefore, the bottom raising portion hardly comes into contact with a flow of air flowing along a tire surface during traveling, and thus the aerodynamic effect can be improved.

A fifth aspect provides the tire according to any one of the first to the third aspects, in which the base surface is a bottom of a recess formed toward an inner side of the tire with respect to the outer surface, and the projections are formed such that tops of the projections do not project toward an outer side of the tire from the outer surface.

In this tire, the tops of the projections are formed so as not to project toward the outer side of the tire from the outer surface of the tire. Therefore, the projections hardly come into contact with a flow of air flowing along the tire surface during traveling, and thus the aerodynamic effect can be improved.

A sixth aspect provides the tire according to any one of the first to the fifth aspects, in which in the gradual decrease region, the height of the projections measured from the base surface is constant.

Since the height of the projections measured from the base surface is made constant, processing depths of recesses to be formed in a mold for forming the projections can be made constant, and constant blackness of the pattern region other than the gradual decrease region can be maintained.

An seventh aspect provides the tire according to the first aspect, in which the gradual decrease region is provided with three or more kinds of the projections and heights of each of the three or more kinds of projections from the bottom raising portion is different.

In the tire provided with the bottom raising portion projecting from the base surface in the gradual decrease region, three or more kinds of the projections are provided different in height from the bottom raising portion. As a result, a smooth gradation can be obtained.

In a case where the height of the projections is made different through provision of the bottom raising portion, when two kinds of the projections different in height are provided, a change in height of the bottom raising portion per length unit becomes too large, and a large level difference where stress is easily concentrated is generated in the gradual decrease region, whereby a crack may occur from the level difference. On the other hand, when three or more kinds of the projections different in height are provided, in the gradual decrease region, a change in height of the bottom raising portion per length unit becomes small, and stress concentration is relieved, whereby a crack hardly occurs.

### Advantageous Effects of Invention

According to the present invention, a range of expression of a decorative portion in which projections are formed in a tire can be broadened.

### BRIEF DESCRIPTION OF DRAWINGS

Fig. 1A is a side view of a tire according to a first embodiment of the present invention, Fig. 1B is an explanatory view showing a relationship between a bottom raising projection of a gradation region provided in a low brightness region of a decorative portion and brightness, and Fig. 1C is a perspective view of the bottom raising projection.
Fig. 2 is a plan view showing the low brightness region of the decorative portion of the tire according to the first embodiment of the invention.
Fig. 3 is an enlarged plan view showing projections formed in the low brightness region of the decorative portion of the tire according to the first embodiment of the invention.
Fig. 4A is a sectional view showing first asterisk projections formed in the low brightness region of the decorative portion of the tire according to the first embodiment of the invention, and Fig. 4A is a sectional view showing second asterisk projections formed in the low brightness region.
Fig. 5 is a plan view showing a low brightness region of a decorative portion of a tire according to a second embodiment of the invention.
Fig. 6A is a sectional view showing the low brightness region of the decorative portion of the tire according to the second embodiment of the invention, and Fig. 6B is a sectional view of rib projections formed in the low brightness region.
Figs. 7A to 7C are sectional views of a bottom raising projection according to other embodiments.
Fig. 8 is a perspective view of a tread showing a decorative portion of a tire according to a third embodiment of the invention.
Fig. 9 is a sectional view of a low brightness region of a tire according to another embodiment.

### DESCRIPTION OF EMBODIMENTS

### <First Embodiment>

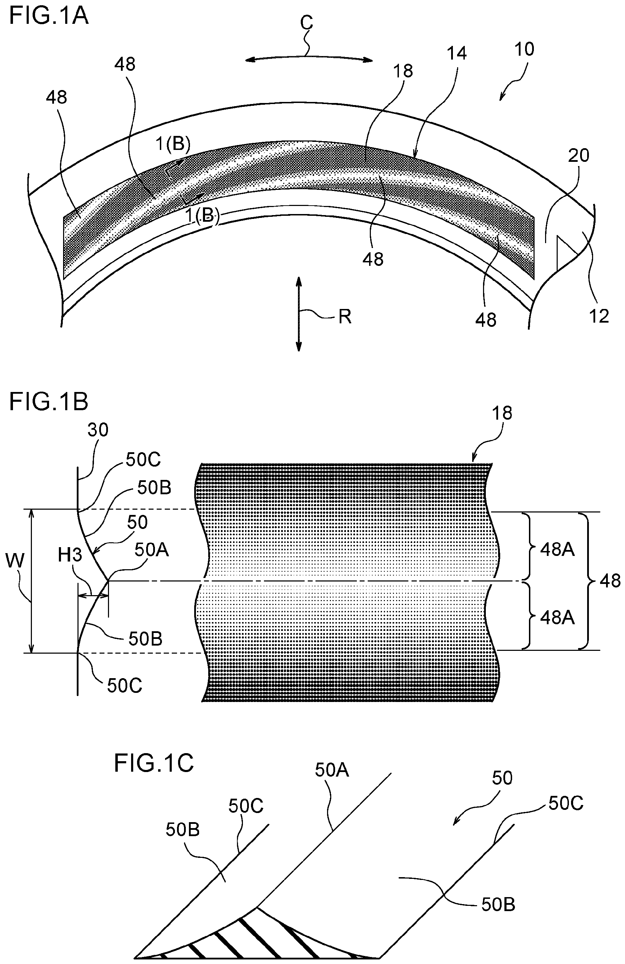

One example of a tire according to a first embodiment of the present invention will be described with reference to Figs 1 to 5. Arrow C shown in the drawings indicates a tire circumferential direction and arrow R indicates a tire radial direction.

As shown in Fig. 1A, a decorative portion 14 is formed in a tire side portion 12 of a tire 10. When seen from an axial direction of the tire 10, the decorative portion 14 of the embodiment has an arc shape, but may have an annular shape that extends continuously in the circumferential direction.

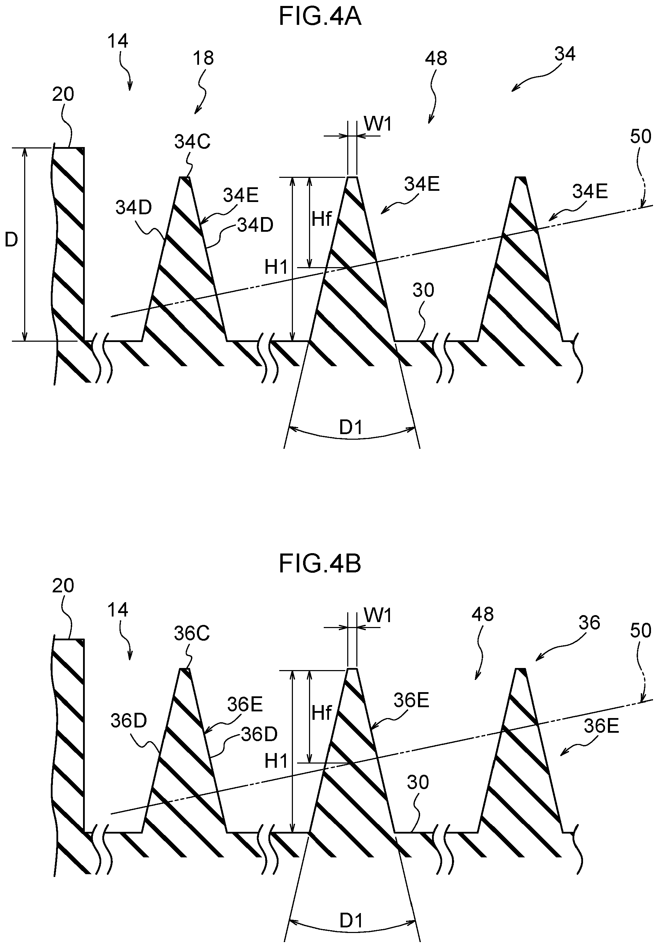

In the decorative portion 14, a flat base surface 30 (see Fig. 4) is formed that recesses by a constant dimension with respect to another region 20 in which projections described later or the like are not formed in regions other than the decorative portion 14 in the tire side portion 12. In the embodiment, the base surface 30 is recessed by 0.45 mm with respect to the other region 20 of the tire side portion 12 (see Fig. 4). The base surface 30 of the embodiment has the same surface roughness as that of the other region 20.

A low brightness region 18 whose brightness is lower than the other region 20 and that appears to be black color is formed all over the decorative portion 14. The low brightness region 18 is an example of the pattern region.

In a mold (metal mold) for forming the tire 10, irregularities are provided in a portion corresponding to the low brightness region 18 to form the low brightness region 18. The low brightness region 18 is preferably disposed in the tire side portion 12 from the perspective of visibility when the tire 10 is mounted to a vehicle.

### (Low Brightness Region 18)

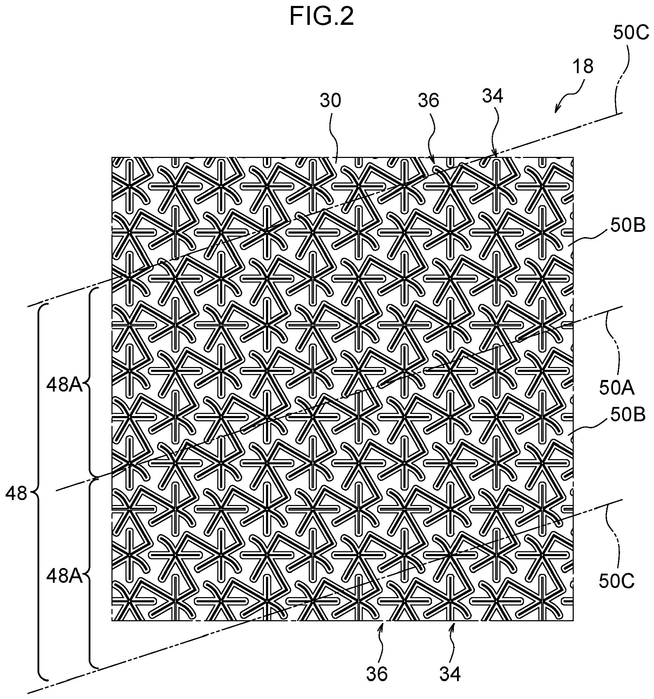

As shown in Figs. 2 to 3, the low brightness region 18 includes a plurality of first asterisk projections 34 and a plurality of second asterisk projections 36 projecting from the base surface 30. The first asterisk projections 34 and the second asterisk projections 36 are alternately disposed in the tire circumferential direction and the tire radial direction. The first asterisk projections 34 and the second asterisk projections 36 are examples of the projection.

### [First Asterisk Projection 34]

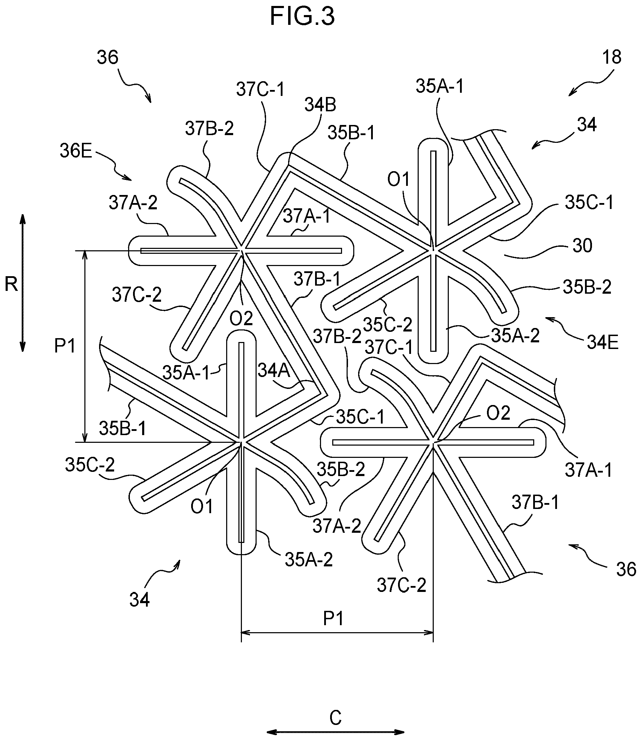

As shown in Fig. 3, each of the first asterisk projections 34 is constituted of first extending portions 35A-1 and 35A-2, second extending portions 35B-1 and 35B-2, and third extending portions 35C-1 and 35C-2, each of which extends in a different direction from a center O1 serving as a base point when seen from a direction orthogonal to the base surface 30 (direction of a rotation axis of the tire 10). Hereinafter, these six extending portions are collectively referred to as "extending portion 34E". One extending portion 34E and another extending portion 34E (excluding extending portions extending in mutually reverse directions from the center O1) constitute a line shape bent at the center O1.

The first extending portion 35A-1 and the first extending portion 35A-2 extend in mutually reverse directions from the center O1, and the first extending portion 35A-1 and the first extending portion 35A-2 constitute a shape that continuously extend in a straight line. The first extending portion 35A-1 extends to the outer side in the tire radial direction from the center O1, and the first extending portion 35A-2 extends to the inner side in the tire radial direction from the center O1. The first extending portion 35A-1 and the first extending portion 35A-2 have the same length. Hereinafter, the first extending portion 35A-1 and the first extending portion 35A-2 are collectively referred to as "first extending portion 35A".

The second extending portion 35B-1 and the second extending portion 35B-2 extend in mutually reverse directions from the center O1, and the second extending portion 35B-1 and the second extending portion 35B-2 constitute a shape that continuously extend in a straight line. The second extending portion 35B-1 and the second extending portion 35B-2 are inclined with respect to the tire circumferential direction so that an end on one side (left side of the drawing) in the tire circumferential direction is located outer side in the tire radial direction as compared with an end on the other side (right side in the drawing).

The second extending portion 35B-1 extends to the one side in the tire circumferential direction from the center O1, and the second extending portion 35B-2 extends to the other side in the tire circumferential direction from the center O1. The second extending portion 35B-1 is longer than the second extending portion 35B-2. A portion on a tip side of the second extending portion 35B-2 is curved to the inner side in the tire radial direction. Hereinafter, the second extending portion 35B-1 and the second extending portion 35B-2 are collectively referred to as "second extending portion 35B".

The third extending portion 35C-1 and the third extending portion 35C-2 extend in mutually reverse directions from the center O1, and the third extending portion 35C-1 and the third extending portion 35C-2 constitute a shape that continuously extend in a straight line. The third extending portion 35C-1 and the third extending portion 35C-2 are inclined with respect to the tire circumferential direction so that an end on the one side (left side of the drawing) in the tire circumferential direction is located inner side in the tire radial direction as compared with an end on the other side (right side in the drawing).

The third extending portion 35C-1 extends to the other side in the tire circumferential direction from the center O1, and the third extending portion 35C-2 extends to the one side in the tire circumferential direction from the center O1. The third extending portion 35C-1 is shorter than the third extending portion 35C-2. Hereinafter, the third extending portion 35C-1 and the third extending portion 35C-2 are collectively referred to as "third extending portion 35C".

Six extending portions 34E each form an angle of 60° together with an adjacent extending portion 34E. In other words, the first asterisk projections 34 each have a shape in which six extending portions 34E extend radially from the center O1.

As shown in Fig. 4A, in each of the extending portions 34E of the first asterisk projections 34, the cross section in the direction orthogonal to the extending direction has a substantially isosceles triangle shape having a flat top surface 34C. This means that the first asterisk projections 34 include the top surface 34C and a pair of side surfaces 34D. In the embodiment, the width of the top surface 34C (W1 in the drawing) is 0.02 mm, and an apex angle (D1 in the drawing) of the first asterisk projections 34 is 26 [°]. The height (HI in the drawing) of the first asterisk projections 34 measured from the base surface 30 is set to one predetermined value of from 0.1 mm to 1.0 mm. When the height of the projections (projecting height) is less than 0.1 mm, it is difficult to form a projection, and the brightness may not be lowered to such a degree that the low brightness region 18 appears to be black color through causing of the incident light to decline (details will be described later). Since the height of the projections is set to 1.0 mm or less, a difference between the rigidity of projection portions and the rigidity of portions around the projections is reduced so that local concentration of stress is suppressed.

The height of the projections in the embodiment and a dimension of an interval (pitch) or the like between the projections described later can be measured using, for example, VR-3000 One-Shot 3D Measuring Macroscope by KEYENCE CORPORATION.

### [Second Asterisk Projection 36]

As shown in Fig. 3, second asterisk projections 36 each have a shape similar to the shape of the first asterisk projections 34. Specifically, second asterisk projections 36 each have a shape of the first asterisk projections 34 vertically inverted after being rotated by 90 [°] clockwise around the center O1 when seen from the direction orthogonal to the base surface 30.

In the second asterisk projections 36, portions corresponding to the first extending portions 35A-1 and 35A-2, the second extending portions 35B-1 and 35B-2, the third extending portions 35C-1 and 35C-2, and the center O1 of the first asterisk projections 34 are referred to as first extending portions 37A-1 and 37A-2, second extending portion 37B-1 and 37B-2, third extending portion 37C-1 and 37C-2, and a center 02, respectively. Hereinafter, these six extending portions are collectively referred to as "extending portion 36E".

As shown in Fig. 4B, in the second asterisk projections 36, a portion corresponding to the top surface 34C of the first asterisk projections 34 is referred to as a top surface 36C. In the second asterisk projections 36, portions corresponding to the side surfaces 34D of the first asterisk projections 34 are referred to as side surfaces 36D. A height H1 and an apex angle D1 of the second asterisk projections 36 are specified in the same manner as the height H1 and the apex angle D1 of the first asterisk projections 34.

### [Others]

As shown in Figs. 2 and 3, the first asterisk projections 34 and the second asterisk projections 36 are alternately disposed in the tire circumferential direction and the tire radial direction and fill the entire low brightness region 18.

The tip of each of the first extending portions 35A-1 and 35A-2 of the first asterisk projections 34 is inserted into each of areas between the second extending portion 37B-2 and the third extending portion 37C-1, and between the second extending portion 37B-1 and the third extending portion 37C-2 of the adjacent second asterisk projections 36 in the tire radial direction. The tip of each of the first extending portions 37A-1 and 37A-2 of the second asterisk projections 36 is inserted into each of areas between the second extending portion 35B-1 and the third extending portion 35C-2, and between the second extending portion 35B-2 and the third extending portion 35C-1 of the adjacent first asterisk projections 34 in the tire circumferential direction.

The tip of the third extending portion 35C-1 of the first asterisk projections 34 is connected with the tip of the second extending portion 37B-1 of the second asterisk projections 36 disposed outer side in the tire radial direction with respect to the first asterisk projections 34. In this way, a connecting portion 34A is formed. The tip of the second extending portion 35B-1 of the first asterisk projections 34 is connected with the tip of the third extending portion 37C-1 of the second asterisk projections 36 disposed on the one side in the tire circumferential direction with respect to the first asterisk projections 34. In this way, a connecting portion 34B is formed.

In this configuration, the first asterisk projections 34 and the second asterisk projections 36 are connected with each other from the inner side toward the outer side in the tire radial direction through the connecting portions 34A and 34B in a step shape.

In the first asterisk projections 34 and the second asterisk projections 36 adjacent to each other in the tire radial direction and the tire circumferential direction, the interval (hereinafter, referred to as "interval PI") between the center O1 and the center 02 is set to one predetermined value of from 0.1 mm to 1.0 mm. When the interval P1 is less than 0.1 mm, it is difficult to form a projection. When the interval P1 is more than 1.0 mm, the brightness may not be lowered to such a degree that the low brightness region 18 appears to be black color through causing of the incident light to decline as compared with the other region 20 other than the decorative portion 14 in the tire side portion 12 (details will be described later).

As shown in Fig. 4, the height H1 of the first asterisk projections 34 and the height H1 of the second asterisk projections 36 each are preferably smaller than a depth dimension D (dimension from the surface of the other region 20 of the tire side portion 12 to the base surface 30) of the decorative portion 14. In other words, the first asterisk projections 34 and the second asterisk projections 36 preferably do not project from the surface of the other region 20 of the tire side portion 12.

### [Gradation Region 48]

In the decorative portion 14 of the embodiment, the brightness of the entire low brightness region 18 is not equally lowered (that is, the value of the brightness is not set to a constant value). In order to broaden the range of expression of the decorative portion, a gradation of the brightness is added so that the brightness gradually increases from black color. Hereinafter, in the low brightness region 18, a region to which the gradation is added is referred to as a gradation region 48. As shown in Fig. 1, the decorative portion 14 of the embodiment is provided with four long narrow strips of the gradation region 48 extending in an inclined manner with respect to the tire circumferential direction.

As shown in Fig. 1B, the low brightness region 18 of the embodiment is provided with a bottom raising projection 50 having a rib shape on the base surface 30 so as to provide the gradation region 48. The bottom raising projection 50 is an example of the bottom raising portion. A sectional shape of the bottom raising projection 50 perpendicular to a longitudinal direction has a height that gradually decreases from a ridge 50A which is the highest at the center toward both sides in the width direction. In other words, the height of the bottom raising projection 50 gradually increases from both ends (foot portions) 50C in the width direction toward the ridge 50A. In this bottom raising projection 50, one side of the ridge 50A (half portion in the width direction) is an example of the gradual increase region. An inclined surface 50B located on both sides of the ridge 50A is formed into a substantially arc shape that has a center of curvature in the outer side of the tire and projects toward the base surface 30. In other words, the inclination angle of the inclined surface 50B with respect to the base surface 30 gradually increases from the ends (foot portions) 50C in the width direction toward the ridge 50A.

In the sectional view of the bottom raising projection 50 perpendicular to the longitudinal direction shown on the left side of Fig. 1B and the enlarged plan view showing the brightness of the gradation region 48 of the low brightness region 18 on the right side of Fig. 1B, the first asterisk projections 34 and the second asterisk projections 36 are omitted, and the plan view on the right side only shows a change in the brightness.

A height H3 of the bottom raising projection 50 is preferably smaller than the depth dimension D (see Fig. 4A) of the decorative portion 14, and smaller than the height H1 of the first asterisk projections 34 and the height H1 of the second asterisk projections 36 (see Fig. 4). The height H3 of the bottom raising projection 50 of the embodiment is constant in the longitudinal direction of the bottom raising projection 50. A width W of the bottom raising projection 50 is not particularly specified, and as shown in Fig. 2, the plurality of first asterisk projections 34 and second asterisk projections 36 may be disposed in the width direction (direction in which the height changes) in a half region 48A, which is a half of the gradation region 48 in the width direction (half the width W of the bottom raising projection 50). The half region 48A is an example of the gradual decrease region.

Here, in the base surface 30 of the gradation region 48 of the embodiment, a region from the ridge 50A to each of the ends (foot portions) 50C in the width direction, in which the inclined surface 50B is provided, in other words, the half region 48A, which is a half of the gradation region 48 in the width direction corresponds to the gradual decrease region as an example in the disclosure. Through provision of the inclined surface 50B on the base surface 30, in the first asterisk projections 34 and the second asterisk projections 36, a height (apparent height) Hf measured from the surface (surface of the inclined surface 50B) of the bottom raising projection 50 is gradually decreased along the inclined surface 50B from the ridge 50Ato the ends (foot portions) 50C in the width direction.

Here, with respect to the low brightness region 18 that appears to be black color described in the embodiment, the value of brightness L measured using a handy spectrophotometer manufactured by NIPPON DENSHOKU INDUSTRIES Co., LTD is, for example, in a range below 10. However, the value of the brightness L need not be below 10 as long as the low brightness region 18 appears to be blacker than the other region 20 other than the decorative portion 14.

On the other hand, with respect to the other region 20 other than the decorative portion 14 in the tire side portion 12 (region in which the first asterisk projections 34 and the second asterisk projections 36 are not formed), the value of the brightness L measured using an handy spectrophotometer manufactured by NIPPON DENSHOKU INDUSTRIES Co., LTD is, for example, in a range larger than 20, but the brightness L may be 20 or less. This means that the low brightness region 18 that appears to be black color is a region whose brightness is relatively low compared with the brightness of the surrounding part on the outer surface of the tire 10.

### (Function and Effect)

Next, the function and the effect of the tire 10 according to the embodiment will be described.

In the other region 20 of the tire side portion 12 in which the first asterisk projections 34 and the second asterisk projections 36 are not formed, incident light is reflected to the outer side by the outer surface that constitutes the other region 20.

On the other hand, in the low brightness region 18 provided at the decorative portion 14 of the tire side portion 12, light that enters the first asterisk projections 34 and the second asterisk projections 36 formed in the low brightness region 18 strikes the side surfaces 34D shown in Fig. 4A. The incident light declines while being repeatedly reflected between the side surfaces 34D facing each other, and then is reflected to the outer side.

Therefore, the amount of light reflected to the outer side in the low brightness region 18 is smaller than the amount of light reflected to the outer side in the other region 20 in which the first asterisk projections 34 and the second asterisk projections 36 are not formed, and thus the low brightness region 18 appears to be relatively black color compared with the other region 20.

As shown in Figs. 1 and 4, the low brightness region 18 is provided with the gradation region 48 that changes the height Hf of the plurality of first asterisk projections 34 and second asterisk projections 36 measured from the surface of the bottom raising projection 50. In the gradation region 48, in a portion including the first asterisk projections 34 and the second asterisk projections 36 whose height Hf is relatively high, the amount of light reflected to the outer side is small and the portion appears to be relatively black color, and in a portion including the first asterisk projections 34 and the second asterisk projections 36 whose height Hf is relatively low, the amount of light reflected to the outer side is relatively large and the portion appears to be relatively bright.

In the gradation region 48, the height of the bottom raising projection 50 gradually changes. Therefore, the brightness increases from the lower portion to the higher portion of the bottom raising projection 50. This means that a smooth gradation is added to the brightness in the gradation region 48. Therefore, as compared with a case where the brightness is set constant, the range of expression of the decorative portion 14 can be broadened (range of technique can be broadened). In the low brightness region 18, the area around the ridge 50A of the bottom raising projection 50 is relatively bright and stands out.

As shown in Fig. 3, each of the extending portions 34E of the first asterisk projections 34 extends in a different direction, and each of the extending portions 36E of the second asterisk projections 36 extends in a different direction. In this way, even when the low brightness region 18 is seen after the angle for seeing the low brightness region 18 is changed, a difference in appearance can be suppressed.

In addition, the first asterisk projections 34 and the second asterisk projections 36 are connected with each other through the connecting portions 34A and 34B in a step shape. In this way, the first asterisk projections 34 and the second asterisk projections 36 support each other through the connecting portions 34A and 34B and falling of the first asterisk projections 34 and the second asterisk projections 36 can be suppressed, whereby the durability can be improved.

### <Second Embodiment>

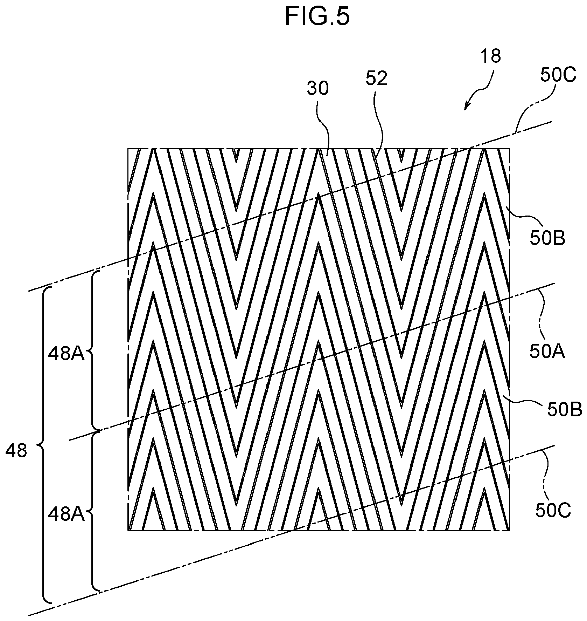

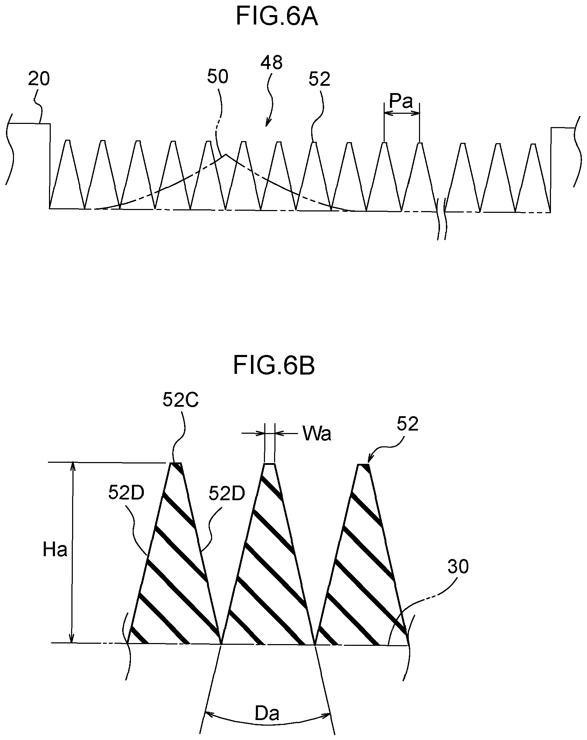

Next, one example of a tire according to a second embodiment of the present invention will be described with reference to Figs 5 and 6. Note that the same components as those of the first embodiment are denoted by the same reference numerals, and description thereof will be omitted.

As shown in Figs. 5 and 6, the base surface 30 of the decorative portion 14 of the embodiment is provided with a plurality of rib projections 52 instead of the first asterisk projections 34 and the second asterisk projections 36 of the first embodiment. As shown in Fig. 5, the rib projections 52 are formed in a zigzag shape in plan view of the decorative portion 14. The rib projections 52 are examples of the projection.

As shown in Fig. 6, in each of the rib projections 52, the cross section in a direction orthogonal to an extending direction has a substantially isosceles triangle shape having a flat top surface 52C. This means that the rib projections 52 each include the top surface 52C and a pair of side surfaces 52D. In the embodiment, the width of the top surface 52C (Wa in the drawing) is 0.02 mm, and an apex angle (Da in the drawing) of the rib projections 52 is 26 [°]. The height (Ha in the drawing) of the rib projections 52 measured from the base surface 30 is set to one predetermined value of from 0.1 mm to 1.0 mm.

In the rib projections 52 adjacent to each other, the interval (hereinafter, referred to as "interval Pa") between the center of one of the rib projections 52 and the center of the other one of the rib projection 52 is set to one predetermined value of from 0.1 mm to 1.0 mm.

The rib projections 52 provided in the low brightness region 18 of the decorative portion 14 of the embodiment are different in shape from the first asterisk projections 34 and the second asterisk projections 36 of the first embodiment. However, by the same principle as the first embodiment, light that enters the rib projections 52 declines while being repeatedly reflected between the side surfaces 52D facing each other, and then is reflected to the outer side. In this way, the amount of light reflected to the outer side in the low brightness region 18 of the embodiment is smaller than the amount of light reflected to the outer side in the other region 20 in which the rib projections 52 are not formed, and thus the low brightness region 18 appears to be relatively black color compared with the other region 20.

The low brightness region 18 of the embodiment is provided with the gradation region 48 that gradually decreases the height of the rib projections 52 measured from the surface of the bottom raising projection 50. Therefore, in the gradation region 48, in a portion including the rib projections 52 whose height is relatively high, the amount of light reflected to the outer side is small and the portion appears to be relatively black color, and in a portion including the rib projections 52 whose height is relatively low, the amount of light reflected to the outer side is relatively large and the portion appears to be relatively bright.

Accordingly, in the low brightness region 18 of the embodiment provided with the rib projections 52 that are different in shape from the first asterisk projections 34 and the second asterisk projections 36, a smooth gradation can be added to the brightness in the gradation region 48. Therefore, as compared with the case where the brightness is made constant, the range of expression of the decorative portion 14 can be broadened (range of technique can be broadened).

### <Other Embodiments>

The present invention has been described in detail with respect to specific embodiments. However, the present invention is not limited to the above embodiments, and it is apparent to those skilled in the art that various other embodiments are possible within the scope of the present invention.

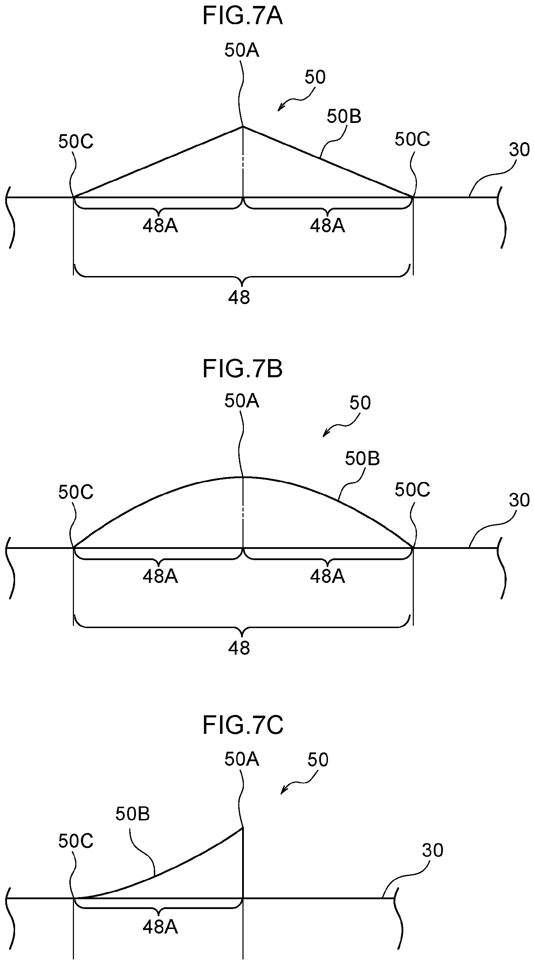

For example, in the above embodiments, the inclination angle of the inclined surface 50B of the bottom raising projection 50 gradually increases toward the ridge 50A from both ends. Alternatively, as shown in Fig. 7A, the inclined surface 50B may be a plane surface whose inclination angle is constant, and as shown in Fig. 7B, the inclined surface 50B may be a curved surface whose inclination angle gradually decreases toward the ridge 50A from both ends and that recesses toward the base surface 30. As shown in Fig. 1C, the shape of the inclined surface 50B is formed into a substantially arc shape that has a center of curvature in an outer side of the tire and projects toward the base surface 30. As a result, as compared with the cases of the shapes shown in Figs. 7A and 7B, it is possible to make the ridge 50A in which the height of the bottom raising projection 50 is maximum appear to be clear.

The bottom raising projection 50 of the embodiments described above is provided with the inclined surface 50B at both sides of the ridge 50A. Alternatively, as shown in Fig. 7C, the bottom raising projection 50 may have the inclined surface 50B on one side and a vertical surface perpendicular to the base surface 30 on the other side.

In the above embodiments, the height H3 of the bottom raising projection 50 is constant in the longitudinal direction of the bottom raising projection 50. Alternatively, the height H3 may change in the longitudinal direction. In this way, in the gradation region 48, a gradation can be added in the longitudinal direction of the bottom raising projection 50, and the range of expression of the decorative portion 14 can be further broadened.

In the above embodiments, the width W of the bottom raising projection 50 is constant in the longitudinal direction of the bottom raising projection 50. Alternatively, the width W may change in the longitudinal direction. In this way, in the gradation region 48, a gradation can be added in the longitudinal direction of the bottom raising projection 50, and the range of expression of the decorative portion 14 can be further broadened.

In the above embodiments, the bottom raising projection 50 continuously extends in a rib shape. Alternatively, the bottom raising projection 50 may be intermittently formed.

In the above embodiments, the bottom raising projection 50 is formed in a rib shape that extends in one direction. However, the present invention is not limited to this, and the bottom raising projections 50 may be formed into a cone shape. In this way, it is possible to make the gradation region 48 appear to be a circular shape in plan view. Additionally, it is possible to make the central part of the circle appear to be the brightest and make the brightness appear to be gradually decreased toward the radial outer side from the central part.

The shape of the gradation region 48 in plan view is not limited to an arc shape, and may be another shape such as a linear shape, and may be a character, a brand logo, a mark, or the like.

In the above embodiments, the entire decorative portion 14 is defined as the low brightness region 18, but only a part of the decorative portion 14 may be defined as the low brightness region 18 (the rest is the base surface 30 only). The shape of the low brightness region 18 in plan view is not limited to an arc shape, and may be another shape such as a linear shape, and may be a character, a brand logo, a mark, or the like.

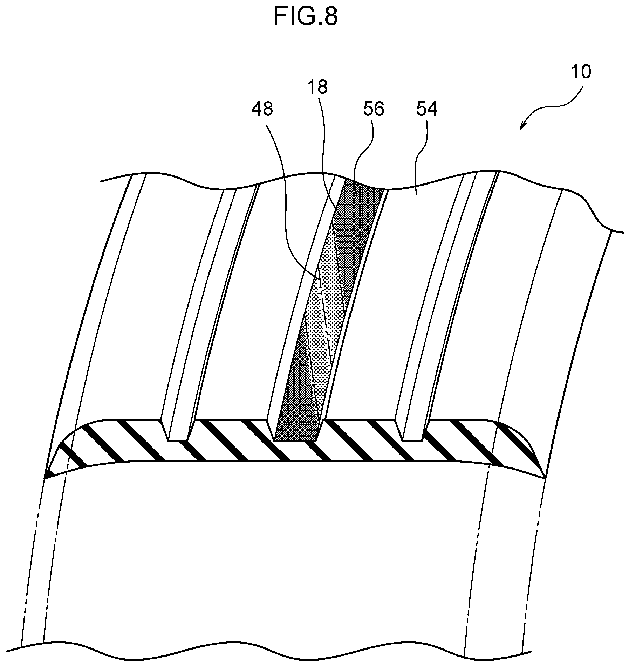

In the embodiments described above, the decorative portion 14 including the low brightness region 18 is provided on the tire side portion 12 of the tire 10. Alternatively, although not shown, the decorative portion 14 may be provided in a bead portion. For example, as shown in Fig. 8, the low brightness region 18 including the gradation region 48 may be provided at a groove bottom of a groove 56 that is formed in a tread 54 so that the groove bottom serves as a decorative portion. Although not shown, the low brightness region 18 may be provided on a groove side surface of the groove 56 so that the groove side surface serves as a decorative portion. The part in which the decorative portion 14 is provided is not limited as long as the decorative portion 14 is provided on the outer surface of tire 10.

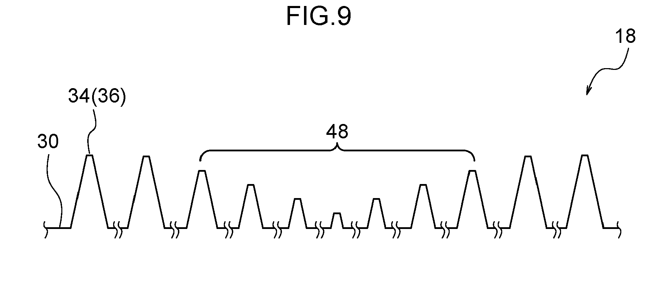

For example, in the low brightness region 18 of the first embodiment, since a part of the low brightness region 18 serves as the gradation region 48, the bottom raising projection 50 is provided and a depth of a valley between projections is changed so as to change the height Hf of the first asterisk projections 34 and the second asterisk projections 36 from the bottom raising projection 50. However, as shown in Fig. 9, a region in which the height of the first asterisk projections 34 and the second asterisk projections 36 from the base surface 30 are gradually changed is defined as the gradation region 48 so that a smooth gradation is added to the brightness, whereby the range of expression of the decorative portion 14 can be broadened (technique can be broadened)

The disclosure of Japanese Patent Application No. 2017-238588 filed on December 13, 2017 is referred to herein.

## Claims

1. A tire (10) comprising:
a decorative portion (14) that is formed on an outer surface of the tire and that has a base surface (30); and
a pattern region that is provided at the decorative portion and that includes a plurality of projections (34, 36) projecting at a height of from 0.1 mm to 1.0 mm from the base surface and formed at an interval (P1) of from more than 0.1 mm to 1.0 mm, **characterized in that**
the pattern region is provided with a gradual decrease region in which a height of projections disposed adjacent to each other gradually decreases, and **in that**
the gradual decrease region includes projections having a constant height from the base surface and a bottom raising portion including a gradual increase portion having a height from the base surface that gradually increases across the projections, so that a height from the bottom raising portion to tops of the projections gradually decreases.

2. The tire according to claim 1, wherein the bottom raising portion includes two gradual increase portions connected in mutually opposite directions.

3. The tire according to claim 1 or 2, wherein a portion in which a height of the bottom raising portion changes is formed with a curve that projects toward the base surface.

4. The tire according to any one of claims 1 to 3, wherein:
the base surface is a bottom of a recess formed toward an inner side of the tire with respect to the outer surface, and
the bottom raising portion is formed such that a top of the bottom raising portion does not project toward an outer side of the tire from the outer surface.

5. The tire according to any one of claims 1 to 3, wherein:
the base surface is a bottom of a recess formed toward an inner side of the tire with respect to the outer surface, and
the projections are formed such that tops of the projections do not project toward an outer side of the tire from the outer surface.

6. The tire according to any one of claims 1 to 5, wherein, in the gradual decrease region, a height (H1) of the projections measured from the base surface is constant.

7. The tire according to claim 1, wherein the gradual decrease region is provided with three or more kinds of the projections, heights of each of the three or more kinds of projections from the bottom raising portion being different.

## Patentansprüche

1. Reifen (10), der Folgendes umfasst:
einen dekorativen Abschnitt (14), der auf einer Außenfläche des Reifens geformt ist und der eine Grundfläche (30) aufweist, und
einen Musterabschnitt, der an dem dekorativen Abschnitt bereitgestellt wird und der eine Vielzahl von Vorsprüngen (34, 36) einschließt, die mit einer Höhe von 0,1 mm bis 1,0 mm von der Grundfläche vorspringen und in einem Abstand (P1) von mehr als 0,1 mm bis 1,0 mm geformt sind, **dadurch gekennzeichnet, dass**
der Musterabschnitt mit einem Abschnitt allmählicher Abnahme versehen ist, in dem eine Höhe von Vorsprüngen, die zueinander benachbart angeordnet sind, allmählich abnimmt, und dadurch, dass
der Abschnitt allmählicher Abnahme Vorsprünge, die eine konstante Höhe von der Grundfläche aus aufweisen, und einen Abschnitt mit ansteigender Sohle einschließlich eines Abschnitts allmählicher Zunahme einschließt, der eine Höhe von der Grundfläche aus aufweist, die über die Vorsprünge allmählich zunimmt, so dass eine Höhe von dem Abschnitt mit ansteigender Sohle zu Oberteilen der Vorsprünge allmählich abnimmt.

2. Reifen nach Anspruch 1, wobei der Abschnitt mit ansteigender Sohle zwei Abschnitte allmählicher Zunahme einschließt, die in wechselseitig entgegengesetzten Richtungen verbunden sind.

3. Reifen nach Anspruch 1 oder 2, wobei ein Abschnitt, in dem sich eine Höhe des Abschnitts mit ansteigender Sohle ändert, mit einer Krümmung geformt ist, die zu der Grundfläche hin vorspringt.

4. Reifen nach einem der Ansprüche 1 bis 3, wobei:
die Grundfläche eine Sohle einer Aussparung ist, die zu einer inneren Seite des Reifens hin in Bezug auf die Außenfläche geformt ist, und
der Abschnitt mit ansteigender Sohle derart geformt ist, dass ein Oberteil des Abschnitts mit ansteigender Sohle nicht zu einer äußeren Seite des Reifens hin von der Außenfläche aus vorspringt.

5. Reifen nach einem der Ansprüche 1 bis 3, wobei:
die Grundfläche eine Sohle einer Aussparung ist, die zu einer inneren Seite des Reifens hin in Bezug auf die Außenfläche geformt ist, und
die Vorsprünge derart geformt sind, dass Oberteile der Vorsprünge nicht zu einer äußeren Seite des Reifens hin von der Außenfläche aus vorspringen.

6. Reifen nach einem der Ansprüche 1 bis 5, wobei, in dem Abschnitt allmählicher Abnahme, eine Höhe (H1) der Vorsprünge, gemessen von der Grundfläche aus, konstant ist.

7. Reifen nach Anspruch 1, wobei der Abschnitt allmählicher Abnahme mit drei oder mehr Arten der Vorsprünge versehen ist, wobei Höhen jeder der drei oder mehr Arten von Vorsprüngen von dem Abschnitt mit ansteigender Sohle aus unterschiedlich sind.

## Revendications

1. Bandage pneumatique (10), comprenant :
une partie décorative (14) formée sur une surface extérieure du bandage pneumatique et comportant une surface de base (30) ; et
une région de motif fournie au niveau de la partie décorative et incluant une pluralité de saillies (34, 36) faisant saillie à une hauteur de 0,1 mm à 1,0 mm à partir de la surface de base et formées à un intervalle (P1) de plus de 0,1 mm à 1,0 mm, **caractérisé en ce que** :
la région de motif est pourvue d'une région à diminution progressive, dans laquelle une hauteur de saillies disposées de manière adjacente les unes aux autres diminue progressivement ; et **en ce que** :
la région à diminution progressive inclut des saillies ayant une hauteur constante à partir de la surface de base, et une partie à rehaussement inférieure incluant une partie à accroissement progressif ayant une hauteur à partir de la surface de base qui augmente progressivement à travers les saillies, de sorte qu'une hauteur de la partie à rehaussement inférieure vers des sommets des saillies diminue progressivement.

2. Bandage pneumatique selon la revendication 1, dans lequel la partie à rehaussement inférieure inclut deux parties à rehaussement progressif connectées dans des directions mutuellement opposées.

3. Bandage pneumatique selon la revendication 1 ou 2, dans lequel une partie, dans laquelle une hauteur de la partie à rehaussement inférieure change, est formée avec une courbe qui fait saillie vers la surface de base.

4. Bandage pneumatique selon l'une quelconque des revendications 1 à 3, dans lequel :
la surface de base constitue un fond d'un évidement formé vers un côté interne du bandage pneumatique par rapport à la surface extérieure ; et
la partie à rehaussement inférieure est formée de sorte qu'un sommet de la partie à rehaussement inférieure ne fait pas saillie vers un côté externe du bandage pneumatique à partir de la surface extérieure.

5. Bandage pneumatique selon l'une quelconque des revendications 1 à 3, dans lequel :
la surface de base constitue un fond d'un évidement formé vers un côté interne du bandage pneumatique par rapport à la surface extérieure ; et
les saillies sont formées de sorte que des sommets des saillies ne font pas saillie vers un côté externe du bandage pneumatique à partir de la surface extérieure.

6. Bandage pneumatique selon l'une quelconque des revendications 1 à 5, dans lequel, dans la région à diminution progressive, une hauteur (H1) des saillies mesurée à partir de la surface de base est constante.

7. Bandage pneumatique selon la revendication 1, dans lequel la région à diminution progressive est pourvue de trois ou plusieurs types de saillies, les hauteurs de chacun des trois ou plusieurs types de saillies à partir de la partie à rehaussement inférieure étant différentes.
